# EUROPEAN PATENT SPECIFICATION

(11) **EP 1 905 116 B1**
(45) Date of publication and mention of the grant of the patent: **09.03.2011**
(21) Application number: 06756657.0
(22) Date of filing: 23.05.2006
(51) Int. Cl.: H01M 8/06, H01M 8/04, H01M 8/24, H01M 8/12

(54) **FUEL CELL SYSTEM**
BRENNSTOFFZELLENSYSTEM
SYSTEME DE PILE A COMBUSTIBLE

(30) Priority: 23.05.2005 JP 2005149361
(43) Date of publication of application: 02.04.2008
(73) Proprietor: HONDA MOTOR CO., LTD., Tokyo 107-8556 (JP)
(72) Inventor: KANAO, Yukihisa c/o HONDA R & D CO., LTD., Wako-shi, Saitama 3510193 (JP)
(74) Representative: Piésold, Alexander James
(86) International application number: PCT/JP2006/310611
(87) International publication number: WO 2006/126700

(56) References cited:
- EP-A1- 0 814 526
- WO-A-01/31727

## Description

### Technical Field

The present invention relates to a fuel cell system in which a fuel cell stack, a heat exchanger, an evaporator, and a reformer are provided in a casing.

### Background Art

For example, a solid oxide fuel cell (SOFC) employs an electrolyte of ion-conductive oxide such as stabilized zirconia. The electrolyte is interposed between an anode and a cathode to form an electrolyte electrode assembly (unit cell). The electrolyte electrode assembly is interposed between separators (bipolar plates). In use, predetermined numbers of the unit cells and the separators are stacked together to form a fuel cell stack.

Normally, as a fuel gas supplied to the fuel cell, a hydrogen gas produced from a hydrocarbon based raw fuel by a reforming apparatus is used. In the reforming apparatus, after a reforming raw material gas is obtained from the hydrocarbon based raw fuel such as a fossil fuel, e.g., methane or LNG, the reforming raw material gas is subjected to steam reforming or partial oxidation reforming, autothermal reforming or the like to produce a reformed gas (fuel gas).

For example, Japanese Laid-Open Patent Publication No. 2003-40605 discloses a reforming apparatus as shown in FIG. 10. The reforming apparatus includes a reforming unit 1, a combustion unit 2, and a water vapor supply unit 3. A raw material gas is supplied to the reforming unit 1 for producing hydrogen by partial oxidation reaction and water vapor reforming reaction. The combustion unit 2 is provides integrally with the reforming unit 1 for burning a fuel to heat the reforming unit 1. The water vapor supply unit 3 is provided integrally with the reforming unit 1 for at least supplying the raw material gas with water vapor obtained by vaporizing water using the waste heat of the reforming unit 1.

In the reforming unit 1, by partial oxidation reaction, i.e., reaction of the raw fuel in the raw material gas and oxygen, and steam reforming reaction, i.e., reaction of the raw fuel and water vapor, hydrogen is produced from the raw fuel. At this time, for the reaction heat required in the steam reforming reaction (endothermic reaction), the heat generated by burning the fuel is supplied from the combustion unit 2 to the reforming unit 1.

The partial oxidation reaction is exothermal reaction. The reaction temperature of the partial oxidation reaction is higher than the reaction temperature of the steam reforming reaction. Therefore, waste heat is radiated from the reforming unit 1. According to the disclosure, the waste heat from the reforming unit 1 is utilized as a heat source for evaporating the water in the water vapor supply unit 3 .

In the conventional technique, the hydrogen remaining in the exhaust gas from the hydrogen electrode is burned in the air, and the obtained combustion heat is supplied to the reforming unit 1. The combustion heat is utilized as a reforming heat source for the reforming unit 1. In the case of the polymer electrolyte fuel cell, the operating temperature is 100° C or less. Normally, the temperature of the exhaust gas discharged from the fuel cell is lower than the reforming temperature in the reforming unit 1 and the operating temperature of the water vapor supply unit 3.

In the conventional technique, heat is not collected from the exhaust gas, and the remaining hydrogen is burned by the combustion unit 2 to improve the heat recovery efficiency. In the structure, since the combustor for burning the exhaust gas is required, the apparatus is complicated, and the size of the apparatus is large.

Further, in the case where the waste heat from the exhaust gas cannot be collected efficiently, it is necessary to reduce the heat energy radiated naturally from the fuel cell system. Therefore, a large amount of heat insulating material or the like is used, and the size of the fuel cell system becomes considerably large.

EP 0814526 A1 discloses an apparatus with fuel cells in which exhaust gas from the fuel cells flows through a heat exchanger and then is mixed with combustion gas burned by an auxiliary burner. The gas mixture then flows between walls whilst heating air flows in counterflow.

WO 01/31727 discloses an apparatus with a fuel cell stack, a steam reformer and a vaporizer. Exhaust gases flow around the reformer and the vaporizer.

### Disclosure of Invention

A main object of the present invention is to provide a fuel cell system in which it is possible to efficiently ? utilize the heat of an exhaust gas discharged from a fuel cell stack, and effectively improve the heat recovery efficiency without increasing the size of the fuel cell system.

The present invention relates to a fuel cell system including a fuel cell stack, a heat exchanger, an evaporator, a reformer, and a casing. The fuel cell stack is formed by stacking a plurality of fuel cells. Each of the fuel cells includes an electrolyte electrode assembly and a separator stacked together. The electrolyte electrode assembly includes an anode, a cathode, and an electrolyte interposed between the anode and the cathode. The heat exchanger heats an oxygen-containing gas to be supplied to the fuel cell stack. The evaporator evaporates water to produce a mixed fuel of a raw fuel chiefly containing hydrocarbon and water vapor. The reformer reforms the mixed fuel to produce a reformed gas. The casing at least contains the fuel cell stack, the heat exchanger, the evaporator, and the reformer.

An exhaust gas channel as a passage of an exhaust gas discharged from the fuel cell stack after consumption in power generation reaction is provided in the casing. The exhaust gas channel includes a first channel for supplying the exhaust gas to the reformer as a heat source for reforming the mixed fuel gas, a second channel for supplying the exhaust gas to the heat exchanger as a heat source for heating an oxygen-containing gas, and a third channel connected to the downstream side of the second channel, for supplying the exhaust gas to the evaporator as a heat source for evaporating the water.

The reformer comprises an inlet and an outlet and is arranged such that the mixed fuel can flow through the inlet into the reformer and the reformed gas can be supplied to the fuel cell stack through the outlet. The invention is characterised in that compared with the outlet the inlet is provided nearer an exhaust gas outlet of the first channel, and the first channel is opened to the reformer through the exhaust gas outlet, and in that the first channel branches from the second channel.

Preferably, a fluid unit at least including the heat exchanger, the evaporator, and the reformer is provided on one side of the fuel cell stack, and the fluid unit is provided symmetrically with respect to the central axis of the fuel cell stack.

Further, preferably, the reformer is provided adjacent to the fuel cell stack and the evaporator is provided adjacent to the reformer on a side away from the fuel cell stack, and the heat exchanger is provided outside the reformer.

Further, preferably, the evaporator is provided outside the reformer, and the heat exchanger is provided outside the evaporator. Further, preferably, compared with the evaporator the reformer and the heat exchanger are provided nearer the fuel cell stack. Further, preferably, a heat insulating layer is provided around the evaporator, and the exhaust gas is filled in the heat insulating layer.

### Brief Description of Drawings

FIG. 1 is a partial cross sectional view showing a fuel cell system according to a first embodiment of the present invention;
FIG. 2 is a cross sectional view showing main components of a fluid unit of the fuel cell system;
FIG. 3 is a perspective view showing a fuel cell stack of the fuel cell system;
FIG. 4 is an exploded perspective view showing a fuel cell of the fuel cell stack;
FIG. 5 is a partial exploded perspective view showing gas flows in the fuel cell;
FIG. 6 is a perspective view showing main components of an evaporator of the fuel cell system;
FIG. 7 is a partial cross sectional view showing a reformer of the fuel cell system;
FIG. 8 is an exploded perspective view showing main components of the reformer;
FIG. 9 is a cross sectional view showing main components of a fluid unit of a fuel cell system according to a second embodiment of the present invention; and

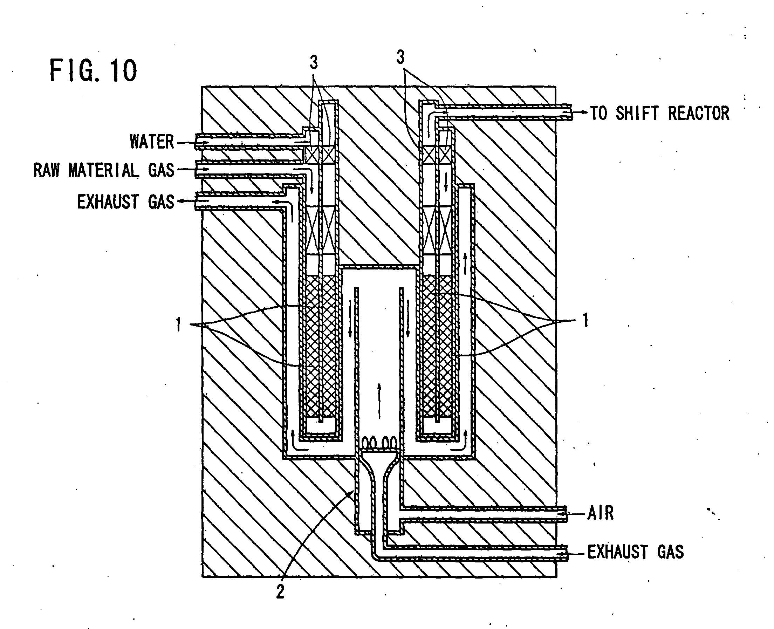

FIG. 10 is a cross sectional view showing a conventional reforming apparatus.

### Best Mode for Carrying Out the Invention

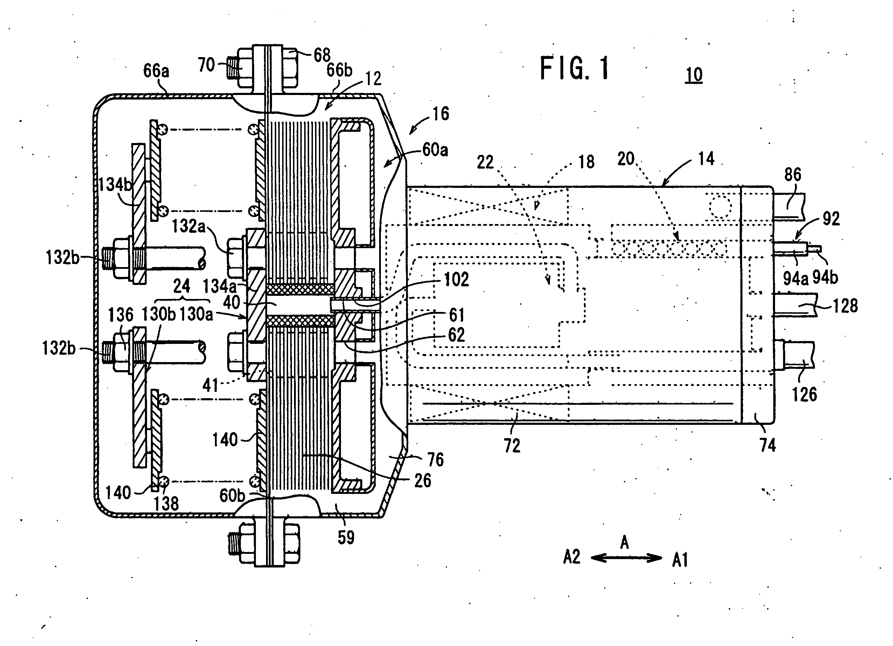

A fuel cell system 10 is used in various applications, including stationary and mobile applications. For example, the fuel cell system 10 is mounted on a vehicle. As shown in FIG. 1, the fuel cell system 10 includes a fuel cell stack 12, a fluid unit 14 provided on one side of the fuel cell stack 12, and a casing 16 containing the fuel cell stack 12 and the fluid unit 14.

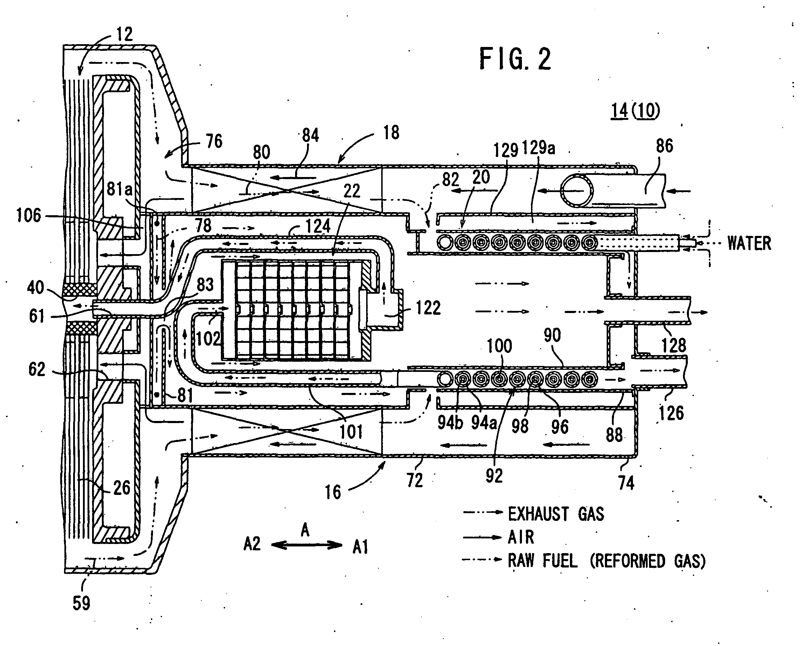

As shown in FIGS. 1 and 2, the fluid unit 14 includes a heat exchanger 18 for heating an oxygen-containing gas before it is supplied to the fuel cell stack 12, an evaporator 20 for evaporating water to produce a mixed fuel of raw fuel chiefly containing hydrocarbon (e.g., the city gas) and the water vapor, and a reformer 22 for reforming the mixed fuel to produce a reformed gas.

The reformer 22 is a preliminary reformer for producing a raw fuel gas chiefly containing methane (CH₄) using hydrocarbon of high carbon (C₂₊) such as ethane (C₂H₆), propane (C₃H₆), and butane (C₄H₁₀) in the city gas by steam reforming. The operating temperature of the reformer 22 is in the range of 300°C to 400°C.

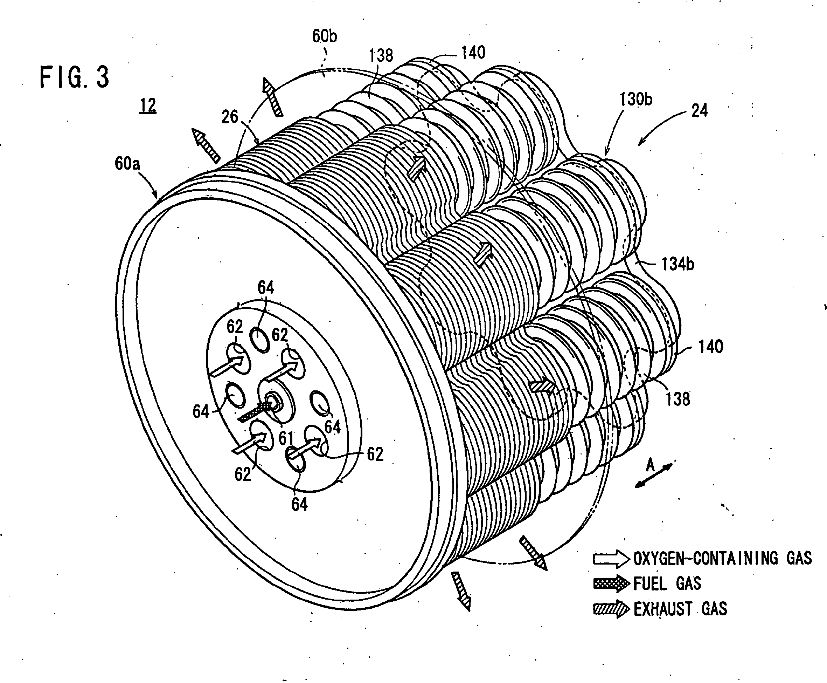

In the casing 16, a load applying mechanism 24 is provided on the other side of the fuel cell stack 12 for applying a tightening load in a stacking direction of the fuel cells 26 of the fuel cell stack 12 indicated by an arrow A (see FIGS. 1 and 3). The fluid unit 14 and the load applying mechanism 24 are provided symmetrically with respect to the central axis of the fuel cell stack 12.

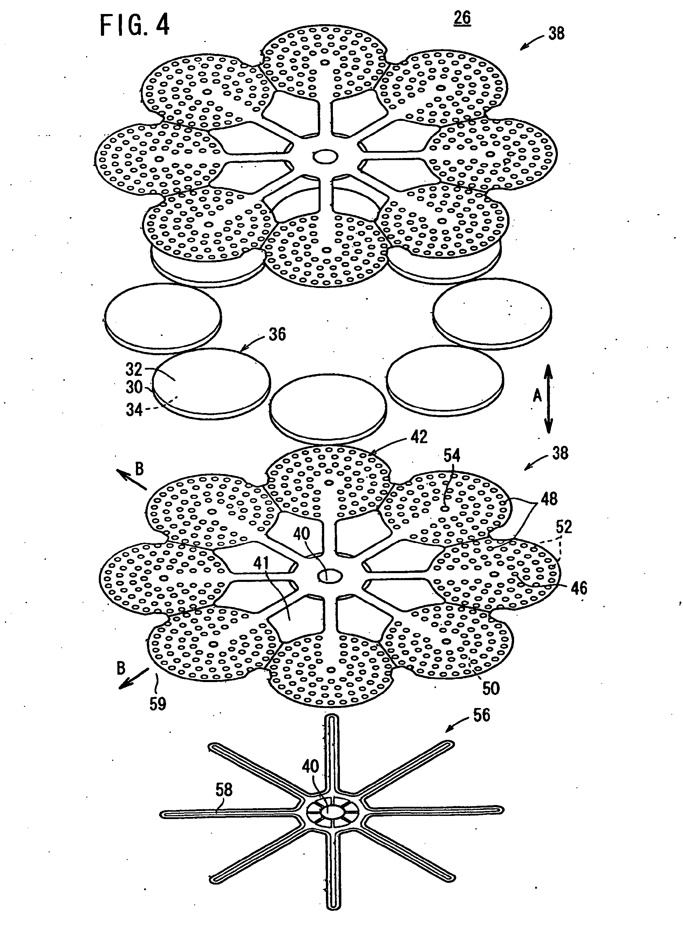

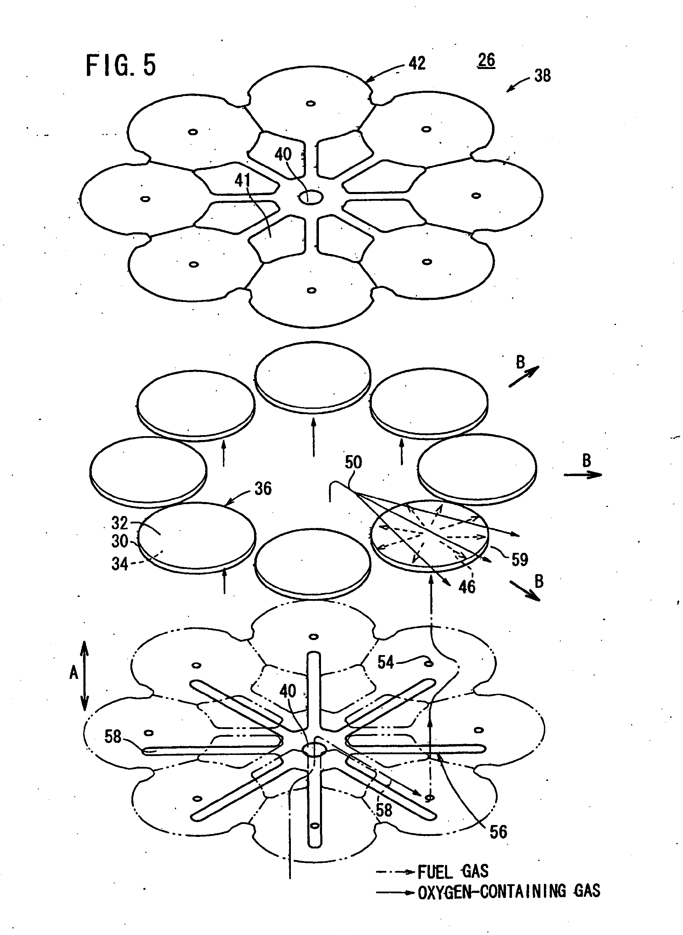

The fuel cell 26 is a solid oxide fuel cell. As shown in FIGS. 4 and 5, the fuel cell 26 includes electrolyte electrode assemblies 36. Each of the electrolyte electrode assemblies 36 includes a cathode 32, an anode 34, and an electrolyte (electrolyte plate) 30 interposed between the cathode 32 and the anode 34. For example, the electrolyte 30 is made of ion-conductive oxide such as stabilized zirconia.

The operating temperature of the fuel cell 26 is high, about 700°C or more. In the electrolyte electrode assembly 36, hydrogen is produced by reforming methane in the fuel gas, and the hydrogen is supplied to the anode 34.

A plurality of, e.g., eight electrolyte electrode assemblies 36 are sandwiched between a pair of separators 38 to form the fuel cell 26. The eight electrolyte electrode assemblies 36 are arranged in a circle concentric with a fuel gas supply passage 40 extending through the center of the separators 38. An oxygen-containing gas supply unit 41 is provided hermetically around the fuel gas supply passage 40.

In FIG. 4, for example, each of the separators 38 comprises a single metal plate of, e.g., stainless alloy or a carbon plate. The fuel gas supply passage 40 extends through the center of the separators 38. The separator 38 includes a plurality of circular disks 42. Each of the circular disks 42 has first protrusions 48 on its surface which contacts the anode 34. The first protrusions 48 form a fuel gas channel 46 for supplying the fuel gas along an electrode surface of the anode 34.

Each of the circular disks 42 has second protrusions 52 on its surface which contacts the cathode 32. The second protrusions 52 form an oxygen-containing gas channel 50 for supplying the oxygen-containing gas along an electrode surface of the cathode 32. As shown in FIGS. 4 and 5, each of the circular disks 42 has a fuel gas inlet 54 for supplying the fuel gas to the fuel gas channel 46.

A channel member 56 is fixed to the separator 38 by brazing or laser welding on a surface facing the cathode 32. The fuel gas supply passage 40 extends through the center of the channel member 56. The channel member 56 forms a fuel gas supply channel 58 connecting the fuel gas supply passage 40 and the fuel gas channel 46. An exhaust gas discharge channel 59 is formed around the separators 38 for discharging consumed reactant gases as an exhaust gas.

As shown in FIGS. 1 and 3, the fuel cell stack 12 includes a plurality of the fuel cells 26 stacked together, and end plates 60a, 60b provided at opposite ends in the stacking direction. A hole 61 is formed at the center of the end plate 60a, and holes 62 and screw holes 64 are formed alternately at predetermined angular intervals along the same virtual circle around the hole 61. The holes 62 are connected to an air channel 84 as described later.

As shown in FIG. 1, the casing 16 includes a first case unit 66a containing the load applying mechanism 24 and a second case unit 66b containing the fuel cell stack 12. The end plate 60b and an insulating member (not shown) are sandwiched between the first case unit 66a and the second case unit 66b. The insulating member is provided on the side of the second case unit 66b. The joint portion between the first case unit 66a and the second case unit 66b is tightened by screws 68 and nuts 70.

The second case unit 66b is joined to one end of a cylindrical third case unit 72 as part of the fluid unit 14. A head plate 74 is fixed to the other end of the third case unit 72. An exhaust gas channel 76 is provided in the third case unit 72. The exhaust gas after consumption in the power generation discharged from the exhaust gas discharge channel 59 of the fuel cell stack 12 flows through the exhaust gas channel 76 in the fluid unit 14.

As shown in FIG. 2, the exhaust gas channel 76 includes a first channel 78 for supplying the exhaust gas to the reformer 22 as a heat source for reforming the mixed fuel, a second channel 80 for supplying the exhaust gas to the heat exchanger 18 as a heat source for heating the oxygen-containing gas, and a third channel 82 connected to the downstream side of the second channel 80 for supplying the exhaust gas to the evaporator 20 as a heat source for evaporating water. The second channel 80 is a main passage, and the first channel 78 is branched from the second channel 80 through a plurality of holes 81a formed in a wall 81. The first channel 78 is opened to the reformer 22 through a rectification hole (exhaust gas outlet) 83.

The reformer 22 and the evaporator 20 are arranged in the direction indicated by the arrow A1 such that the reformer 22 is positioned on the side of the fuel cell stack 12, and the evaporator 20 is positioned on the side away from the fuel cell stack 12. The heat exchanger 18 is provided outside the reformer 22. The distance between the heat exchanger 18 and the reformer 22, and the fuel cell stack 12 should be minimized. The exhaust gas discharge channel 59 of the fuel cell stack 12 is directly connected to the second channel 80 of the exhaust gas channel 76.

The second channel 80 is provided inside the heat exchanger 18. Further, an air channel 84 for the passage of the air is provided inside the heat exchanger 18, near the second channel 80. In the structure, the exhaust gas and the air heated by the exhaust gas flow in a counterflow manner. The air channel 84 is connected to the air supply pipe 86 at the head plate 74.

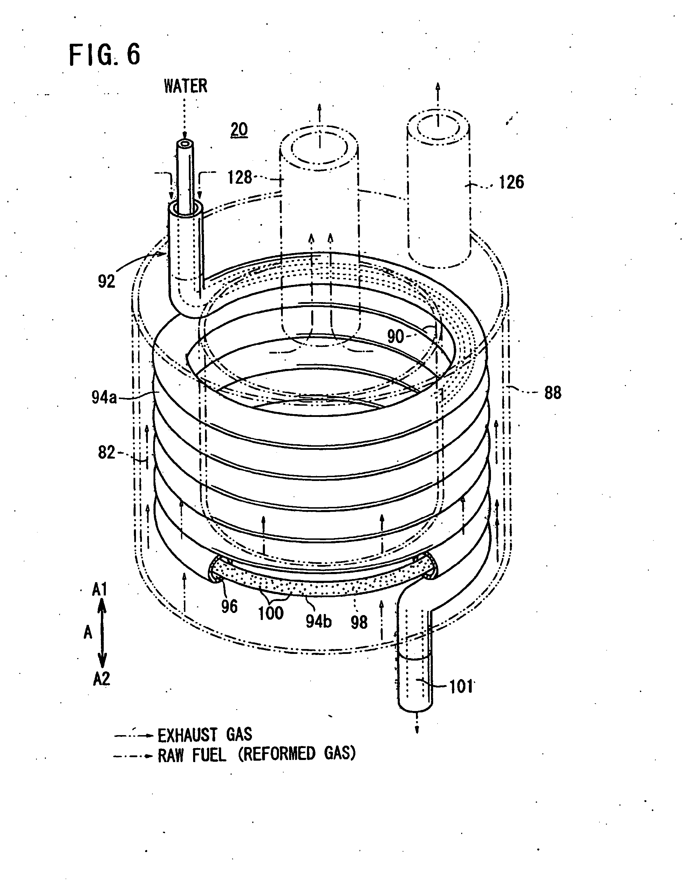

The evaporator 20 has an outer cylindrical member 88 and an inner cylindrical member 90. The outer cylindrical member 88 and the inner cylindrical member 90 are coaxial with each other. A double pipe 92 is provided spirally between the outer cylindrical member 88 and the inner cylindrical member 90. As shown in FIGS. 2 and 6, the double pipe 92 includes an outer pipe 94a and an inner pipe 94b. The third channel 82 is formed between the outer pipe 94a, and the outer cylindrical member 88 and the inner cylindrical member 90.

A raw fuel channel 96 is formed between the outer pipe 94a and the inner pipe 94b. A water channel 98 is formed inside the inner pipe 94b. The inner pipe 94b has a plurality of holes 100 on the downstream side of the evaporator 20. For example, the diameter of the holes 100 is in the range of 10 µm to 100 µm.

An end of the double pipe 92 on the upstream side extends through the head plate 74 to the outside. At an end of the double pipe 92 on the downstream side, the inner pipe 94b is terminated, and only the outer pipe 94a extends in the direction indicated by the arrow A2. An end of a mixed fuel supply pipe 101 is connected to the outer pipe 94a, and the other end of the mixed fuel supply pipe 101 is connected to an inlet 102 of the reformer 22 (see FIG. 2). The mixed fuel supply pipe 101 extends toward the fuel cell stack 12, and is connected to the inlet 102. The inlet 102 is provided near the rectification hole 83 connected to the first channel 78 branched from the exhaust gas channel 76.

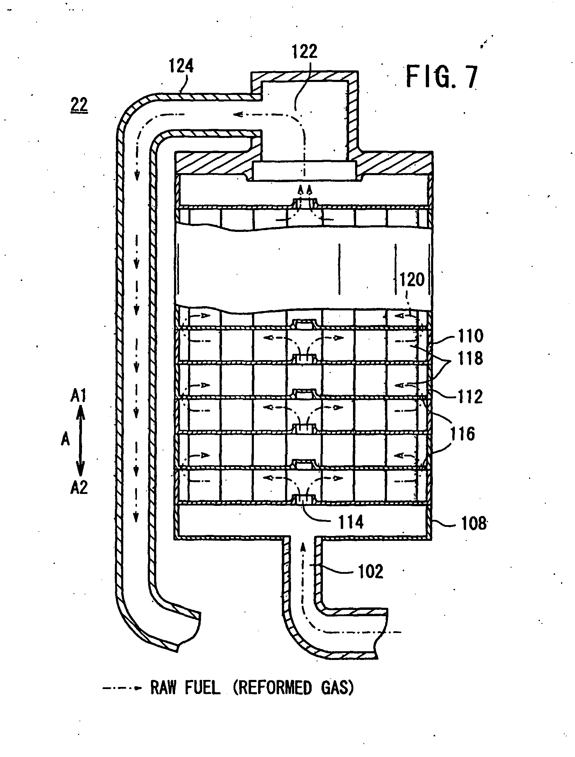

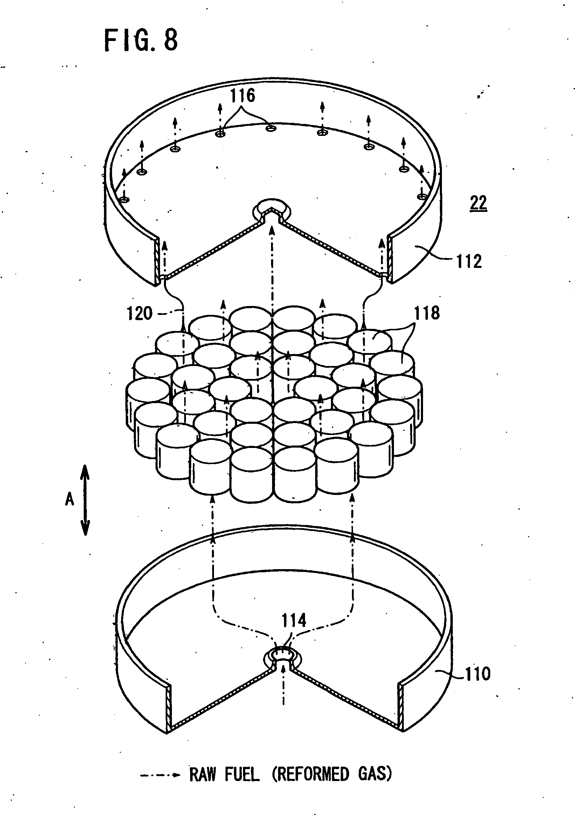

As shown in FIG. 7, the reformer 22 has a lid 108, and the inlet 102 is formed at the lid 108. The lid 108 is positioned at an end of the reformer 22, and the reformer 22 is formed by connecting first receiver members 110 and second receiver members 112 alternately. As shown in FIGS. 7 and 8, the first and second receiver members 110, 112 have a substantially plate shape. A hole 114 is formed at the center of the first receiver member 110. A plurality of holes 116 are formed in a circle in the peripheral portion of the second receiver member 112.

A plurality of reforming catalyst pellets 118 are sandwiched between the first and second receiver members 110, 112. Each of the catalyst pellets 118 has a columnar shape. For example, the catalyst pellet 118 is formed by providing a nickel based catalyst on the base material of ceramics compound.

A reforming channel 120 is formed in the reformer 22. The reforming channel 120 extends in the direction indicated by the arrow A1, and has a serpentine pattern going through the holes 114 of the first receiver members 110 and the holes 116 of the second receiver members 112. On the downstream side of the reformer 22 (at the end of the reformer 22 in the direction indicated by the arrow A1), an outlet 122 is provided, and an end of a reformed gas supply passage 124 is connected to the outlet 122 (see FIG. 7). As shown in FIG. 2, the reformed gas supply passage 124 extends along the axis of the reformer 22, into the hole 61 of the end plate 60a, and is connected to the fuel gas supply passage 40.

A main exhaust gas pipe 126 and an exhaust gas pipe 128 are connected to the head plate 74. The main exhaust gas pipe 126 is connected to the third channel 82 of the evaporator 20. The exhaust gas pipe 128 is provided at the center of the evaporator 20 for discharging the exhaust gas flowing around the reformer 22 in the direction indicated by the arrow A1.

A cylindrical cover 129 is provided around the outer cylindrical member 88 of the evaporator 20. A heat insulating layer 129a is formed in a closed space between the cylindrical cover 129 and the outer cylindrical member 88. The heat insulating layer 129a is connected to the second channel 80, and some of the exhaust gas is filled in the heat insulating layer 129a.

As shown in FIG. 1, the load applying mechanism 24 includes a first tightening unit 130a for applying a first tightening load T1 to a region around (near) the fuel gas supply passage 40 and a second tightening unit 130b for applying a second tightening load T2 to the electrolyte electrode assemblies 36. The second tightening load T2 is smaller than the first tightening load T1 (T1 > T2).

As shown in FIGS. 1 and 3, the first tightening unit 130a includes short first tightening bolts 132a screwed into screw holes 64 formed along one diagonal line of the end plate 60a. The first tightening bolts 132a extend in the stacking direction of the fuel cells 26, and engage a first presser plate 134a. The first presser plate 134a is a narrow plate, and engages the central position of the separator 38 to cover the fuel gas supply passage 40.

The second tightening unit 130b includes long second tightening bolts 132b screwed into screw holes 64 formed along the other diagonal line of the end plate 60a. Ends of the second tightening bolts 132b extend through a second presser plate 134b having a curved outer section. Nuts 136 are fitted to the ends of the second tightening bolts 132b. Springs 138 and spring seats 140 are provided in respective circular portions of the second presser plate 134b, at positions corresponding to the electrolyte electrode assemblies 36 on the circular disks 42 of the fuel cell 26. For example, the springs 138 are ceramics springs.

Operation of the fuel cell system 10 will be described below.

As shown in FIGS. 2 and 6, a raw fuel such as the city gas (including CH₄ C₂H_{6,} C₃H₈, and C₄H₁₀) is supplied to the raw fuel channel 96 of the double pipe 92 of the evaporator 20, and water is supplied to the water channel 98 of the double pipe 92. Further, an oxygen-containing gas such as the air is supplied to the air supply pipe 86.

In the evaporator 20, the raw fuel moves spirally along the raw fuel channel 96 in the double pipe 92, the water moves spirally along the water channel 98, and the exhaust gas as described later flows through the third channel 82. Thus, the water moving through the water channel 98 is evaporated, and gushes out from a plurality of holes 100 formed on the downstream side of the inner pipe 94b to the raw fuel channel 96.

At this time, the water vapor is mixed with the raw fuel flowing through the raw fuel channel 96, and the mixed fuel is obtained. The mixed fuel is supplied to the inlet 102 of the reformer 22 through the mixed fuel supply pipe 101 connected to the outer pipe 94a. As shown in FIG. 7, the mixed fuel supplied from the inlet 102 into the reformer 22 flows through the hole 114 of the first receiver member 110. The mixed fuel is reformed by the catalyst pellets 118 interposed between the first and second receiver members 110, 112. Further, the mixed fuel is supplied to the next pellets 118 from the holes 116 formed in the peripheral portion of the second receiver member 112.

Thus, the mixed fuel moving along the reforming channel 120 having the serpentine pattern in the reformer 22 is reformed by steam reforming. Thus, hydrocarbon of C₂₊ is eliminated to produce a reformed gas (fuel gas) chiefly containing methane. The reformed gas flows through the reformed gas supply passage 124 connecting to the outlet 122 of the reformer 22. Then, the reformed gas is supplied to the fuel gas supply passage 40 of the fuel cell stack 12.

As shown in FIGS. 4 and 5, the fuel gas from the fuel gas supply passage 40 flows along the fuel gas supply channel 58. The fuel gas flows from the fuel gas inlet 54 of the circular disk 42 into the fuel gas channel 46. In each of the electrolyte electrode assemblies 36, the fuel gas inlet 54 is formed at substantially the central position of the anode 34. Therefore, the fuel gas is supplied from the fuel gas inlet 54 to the substantially center of the anode 34, and the methane in the fuel gas is reformed to produce a hydrogen gas. The fuel gas chiefly containing the hydrogen moves along the fuel gas channel 49 toward the outer region of the anode 34.

As shown in FIG. 2, when the air supplied from the air supply pipe 86 to the heat exchanger 18 moves along the air channel 84 of the heat exchanger 18, heat exchange is carried out between air and the burned exhaust gas as descried later flowing along the second channel 80. Thus, the air is heated to a predetermined temperature. As shown in FIGS. 4 and 5, the air heated in the heat exchanger 18 is supplied to the oxygen-containing gas supply unit 41 of the fuel cell stack 12, and flows into a space between the inner circumferential edge of the electrolyte electrode assembly 36 and the inner circumferential edge of the circular disk 42 in the direction indicated by the arrow B. Therefore, the air flows from the inner circumferential edge to the outer circumferential edge of the cathode 32 along the oxygen-containing gas channel 50.

Thus, in the electrolyte electrode assembly 36, the fuel gas flows along the anode 34, and the air flows along the cathode 32 for generating electricity by electrochemical reactions at the anode 34 and the cathode 32. The exhaust gas is discharged to the outside of each of the electrolyte electrode assemblies 36, and flows in the stacking direction along the exhaust gas discharge channel 59. Then, the exhaust gas flows into the exhaust gas channel 76.

The exhaust gas flowing through the exhaust gas channel 76 has the high temperature of about 700°C. As shown in FIG. 2, the exhaust gas partially flows into the first channel 78 branched through the hole 81a. The exhaust gas is supplied into the inlet 102 of the reformer 22 from the rectification hole 83 of the wall 81. After the exhaust gas locally heats the inlet 102 of the reformer 22, the exhaust gas flows inside the evaporator 20, and is discharged to the outside from the exhaust gas pipe 128.

At this time, steam reforming is performed in the reformer 22, and in particular, the temperature around the inlet 102 tends to be decreased. Therefore, bey locally heating the inlet 102 by the hot exhaust gas, it is possible to limit the decrease in the temperature of the reformer 22. Thus, the temperature of the reformer 22 is stabilized. It is possible to maintain the S/C (steam/carbon) ratio at a certain level.

Further, the exhaust gas supplied to the second channel 80 of the exhaust gas channel 76 flows through the heat exchanger 18. Heat exchange between the exhaust gas and the air is performed. The air is heated to a predetermined temperature, and the temperature of the exhaust gas is decreased. Some of the exhaust gas is filled in the heat insulating layer 129a, and the remaining exhaust gas flows into the third channel 82 connected to the second channel 80. The third channel 82 is formed between the outer cylindrical member 88 and the inner cylindrical member 90 of the double pipe 92 of the evaporator 20. The exhaust gas evaporates the water flowing through the water channel 98 of the double pipe 92. Therefore, it is possible to reliably produce the mixed fuel of the raw fuel and the water vapor in the raw fuel channel 96. After the exhaust gas flows through the evaporator 20, the exhaust gas is discharged to the outside through the main exhaust gas pipe 126.

In the first embodiment, the exhaust gas discharged from the fuel cell stack 12 flows separately into the first channel 78 and the second channel 80. The exhaust gas flowing through the first channel 78 heats the area around the inlet 102 of the reformer 22, and the exhaust gas flowing through the second channel 80 is used for heat exchange with the air in the heat exchanger 18. Further, the exhaust gas discharged from the heat exchanger 18 flow through the third channel 82 for heating the evaporator 20. Thus, the heat recovery rate in collecting the heat from the exhaust gas is increased.

Further, the operating temperature of the evaporator 20 is low in comparison with the operating temperature of the heat exchanger 18. Therefore, even if the temperature of the exhaust gas flowing through the second channel 80 is decreased due to the heat exchange, when the exhaust gas having the lower temperature flows through the third channel 82, it still functions as a heat source for generating water vapor in the evaporator 20. Thus, the heat of the exhaust gas is utilized effectively. Heat loss is minimized as much as possible, and further improvement in the heat recovery rate is achieved.

In this manner, the heat in the exhaust gas is collected as much as possible. Therefore, it is not necessary to maintain the heat insulating performance for insulating the heat naturally radiated from the fuel cell system 10. Since the amount of heat insulating material used in the fuel cell system 10 is reduced, it is possible to reduce the size of the fuel cell system 10 advantageously. Further, it is not necessary to achieve the high heat recovery rate for each of the reformer 22, the heat exchanger 18, and the evaporator 20. Consequently, the fuel cell system 10 can be fabricated simply, and cost seduction is achieved easily.

Further, the fluid unit 14 including the heat exchanger 18, the evaporator 20, and the reformer 22 are provided on one side of the fuel cell stack 12, and the fluid unit 14 is provided symmetrically with respect to the central axis of the fuel cell stack 12. Therefore, the fluid unit 14 having the high temperature in the fuel cell system 10 is provided locally within the same area. Heat radiation from the fluid unit 14 is reduced. Thus, it is possible to increase the heat recovery rate. Further, since the fluid unit 14 is provided symmetrically with respect to the central axis of the fuel cell stack 12, significant heat stress or heat distortion is not generated, and improvement in the durability is achieved.

Further, the reformer 22 is provided adjacent to the fuel cell stack 12, and the evaporator 20 is provided adjacent to the reformer 22, oppositely to the fuel cell stack 12. The heat exchanger 18 is provided outside the reformer 22. Thus, by the heat radiated from the heat exchanger 18, it is possible to warm the reformer 22, and improve the heat insulating performance of the reformer 22 effectively. Accordingly, the temperature of the reformer 22 is maintained at a certain level. Reforming reliability is maintained, and improvement in the reforming efficiency is achieved advantageously.

Further, since the heat exchanger 18 and the reformer 22 are provided near the fuel cell stack 12, the heat is transferred from the fuel cell stack 12 easily and reliably. Accordingly, it is possible to increase the heat recovery rate.

Further, the cylindrical cover 129 is provided in the evaporator 20 to cover the outer cylindrical member 88, and the heat insulating layer 129a is provided inside the cylindrical cover 129. Therefore, simply by filling some of the exhaust gas in the heat insulating layer 129a, further improvement in the heat insulating performance of the evaporator 20 is achieved.

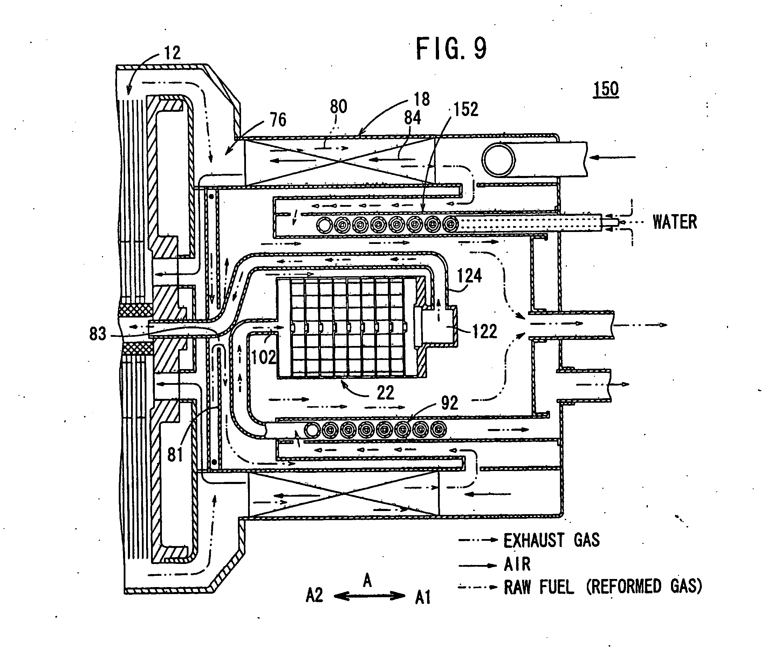

FIG. 9. is a cross sectional view showing main components of a fluid unit 150 of a fuel cell system according to a second embodiment of the present invention. The constituent elements that are identical to those of the fuel cell system 10 according to the first embodiment are labeled with the same reference numeral, and description thereof will be omitted.

A fluid unit 150 includes a heat exchanger 18, a reformer 22, and an evaporator 152. The fluid unit 150 is provided on one side of the fuel cell stack 12, symmetrically with respect to the central axis of the fuel cell stack 12. In the fluid unit 150, the evaporator 152 is provided outside the reformer 22, and the heat exchanger 18 is provided outside the evaporator 152.

In the second embodiment, the evaporator 152 and the reformer 22 are provided inside the heat exchanger 18. In the structure, it is possible to heat the reformer 22 by the heat radiated from the heat exchanger 18. Improvement in the heat insulation performance of the evaporator 152 is achieved effectively. It is possible to produce the water vapor easily. Further, the dimension of the fluid unit 150 in the direction indicated by the arrow A is reduced effectively. Accordingly, reduction in the overall size of the fuel cell system is achieved easily.

### Industrial Applicability

According to the present invention, the reformer is heated by the exhaust gas flowing through the first channel, and heat exchange is performed in the heat exchanger using the exhaust gas flowing through the second channel. Further, after the heat exchange, the evaporator is heated by the exhaust gas flowing through the third channel. Accordingly, the heat recovery rate in collecting the heat from the exhaust gas is increased.

Further, the operating temperature of the evaporator is low in comparison with the operating temperature of the heat exchanger. Therefore, even if the temperature of the exhaust gas flowing through the second channel is decreased due to the heat exchange, the exhaust gas still functions as a heat source for generating water vapor in the evaporator. Thus, the heat of the exhaust gas is utilized effectively. Heart loss is minimized as much as possible, and further improvement in the heat recovery rate is achieved.

In this manner, the heat in the exhaust gas is collected as much as possible. Therefore, it is not necessary to maintain the heat insulating performance for insulating the heat naturally radiated from the fuel cell system. Since the amount of heat insulating material used in the fuel cell system is reduced, it is possible to reduce the size of the fuel cell system advantageously.

## Claims

1. A fuel cell system comprising:
a fuel cell stack (12) formed by stacking a plurality of fuel cells (26), said fuel cells(26) each including an electrolyte electrode assembly (36) and a separator (38) stacked together, said electrolyte electrode assembly (36) including an anode (34), a cathode (32), and an electrolyte (30) interposed between said anode (34) and said cathode (32);
a heat exchanger (18) for heating an oxygen-containing gas to be supplied to said fuel cell stack (12);
an evaporator (20) for evaporating water to produce a mixed fuel of a raw fuel chiefly containing hydrocarbon and water vapor;
a reformer (22) for reforming the mixed fuel to;produce a reformed gas; and
a casing (16) at least containing said fuel cell stack (12), said heat exchanger (18), said evaporator (20), and said reformer (22), wherein an exhaust gas channel (76) as a massage of an exhaust gas discharged from said fuel cell stack (12) after consumption in power generation reaction is provided in said casing (16), and said exhaust gas channel (76) comprises:
a first channel (78) for supplying the exhaust gas to said reformer (22) as a heat source for reforming the mixed fuel gas;
a second channel (80) for supplying the exhaust gas to said heat exchanger (18) as a heat source for heating the oxygen-containing gas; and
a third channel (82) connected to the downstream side of the second channel (80) for supplying the exhaust gas to said evaporator (20) as a heat source for evaporating the water,
wherein said reformer (22) comprises an inlet (102) and an outlet (122) and is arranged such that the mixed fuel can flow through said inlet (102) into said reformer (22), and the reformed gas can be supplied to said fuel cell stack (12) through said outlet (122);
**characterised in that** compared with said outlet (122), said inlet (102) is provided nearer an exhaust gas outlet (83) of said first channel (78), and the first channel (78) is opened to the reformer (22) through said exhaust gas outlet (83);
and **in that** said first channel (78) branches from said second channel (80).

2. A fuel cell system according to claim 1, wherein a fluid unit (14) at least including said heat exchanger (18), said evaporator (20), and said reformer (22) is provided on one side of said fuel cell stack (12); and
said fluid unit (14) is provided symmetrically with respect to the central axis of said fuel cell stack (12).

3. A fuel cell system according to claim 1, wherein said reformer (22) is provided adjacent to said fuel cell stack (12), and said evaporator (20) is provided adjacent to said reformer (22) on a side away from said fuel cell stack (12); and
said heat exchanger (18) is provided outside said reformer (22).

4. A fuel cell system according to claim 1, wherein said evaporator (152) is provided outside said reformer (22), and said heat exchanger (18) is provided outside said evaporator (152).

5. A fuel cell system according to claim 1, wherein compared with said evaporator (20), said reformer (22) and said heat exchanger (18) are provided nearer said fuel cell stack (12).

6. A fuel cell system according to claim 1, wherein a heat insulating layer (129a) is provided around said evaporator (20); and
the exhaust gas is filled in said heat insulating layer (129a).

## Patentansprüche

1. Brennstoffzellensystem, umfassend
- einen durch Stapeln einer Mehrzahl von Brennstoffzellen (26) gebildeten Brennstoffzellenstapel (12), wobei jede der Brennstoffzellen (26) eine Elektrolyt-Elektroden-Anordnung (36) und einen Separator (38) zusammengestapelt umfasst, wobei die Elektrolyt-Elektroden-Anordnung (36) eine Anode (34), eine Kathode (32) und einen zwischen der Anode (34) und der Kathode (32) angeordneten Elektrolyt (30) umfasst,
- einen Wärmetauscher (18) zum Erwärmen eines sauerstoffhaltigen dem Brennstoffzellenstapel (12) zuzuführenden Gases;
- einen Verdampfer (20) zum Verdampfen von Wasser, um ein Brennstoffgemisch aus einem Rohbrennstoff zu erzeugen, das hauptsächlich Kohlenwasserstoff und Wasserdampf enthält;
- einen Reformer (22) zum Reformieren des Brennstoffgemisches, um ein reformiertes Gas zu erzeugen; und
- ein Gehäuse (16), das wenigstens den Brennstoffzellenstapel (12), den Wärmetauscher (18), den Verdampfer (20) und den Reformer (22) enthält, wobei ein Abgaskanal (76) als ein Durchgang eines von dem Brennstoffzellenstapel (12) nach Verbrauch in einer Energieerzeugungsreaktion entlassenen Abgases in dem Gehäuse (16) bereitgestellt ist, und wobei der Abgaskanal (76) umfasst:
- einen ersten Kanal (78) zur Zufuhr des Abgases zu dem Reformer (22) als eine Wärmequelle zum Reformieren des Brennstoffgasgemisches;
- einen zweiten Kanal (80) zur Zufuhr des Abgases zu dem Wärmetauscher (18) als eine Wärmequelle zum Erwärmen des sauerstoffhaltigen Gases; und
- einen dritten Kanal (82), der mit der stromabwärtigen Seite des zweiten Kanals (80) zur Zufuhr des Abgases zu dem Verdampfer (20) als eine Wärmequelle zum Verdampfen des Wassers verbunden ist;
wobei der Reformer (22) einen Einlass (102) und einen Auslass (122) umfasst und so angeordnet ist, dass das Brennstoffgemisch durch den Einlass (102) in den Reformer (22) strömen kann und das reformierte Gas zu dem Brennstoffzellenstapel (12) durch den Auslass (122) zugeführt werden kann; **dadurch gekennzeichnet, dass** der Einlass (102) verglichen mit dem Auslass (122) näher an einem Abgasauslass (83) des ersten Kanals (78) bereitgestellt ist, und der erste Kanal (78) zu dem Reformer (22) durch den Abgasauslass (83) geöffnet ist; und dass der erste Kanal (78) von dem zweiten Kanal (80) abzweigt.

2. Brennstoffzellensystem nach Anspruch 1, wobei eine Fluideinheit (14), die wenigstens den Wärmetauscher (18), den Verdampfer (20) und den Reformer (22) umfasst, an einer Seite des Brennstoffzellenstapels (12) bereitgestellt ist; und die Fluideinheit (14) symmetrisch in Bezug auf die zentrale Achse des Brennstoffzellenstapels (12) bereitgestellt ist.

3. Brennstoffzellensystem nach Anspruch 1, wobei der Reformer (22) dem Brennstoffzellenstapel (12) benachbart bereitgestellt ist und der Verdampfer (20) dem Reformer (22) benachbart an einer Seite weg von dem Brennstoffzellenstapel (12) bereitgestellt ist; und der Wärmetauscher (18) außerhalb des Reformers (22) bereitgestellt ist.

4. Brennstoffzellensystem nach Anspruch 1, wobei der Verdampfer (152) außerhalb des Reformers (22) bereitgestellt ist und der Wärmetauscher (18) außerhalb des Verdampfers (152) bereitgestellt ist.

5. Brehnstoffzellensystem nach Anspruch 1, wobei der Reformer (22) und der Wärmetauscher (18) verglichen mit dem Verdampfer (20) näher an dem Brennstoffzellenstapel (12) bereitgestellt sind.

6. Brennstoffzellensystem nach Anspruch 1, wobei eine Wärmeisolationsschicht (129a) um den Verdampfer (20) herum bereitgestellt ist; und das Abgas in die Wärmeisolationsschicht (129a) gefüllt ist.

## Revendications

1. Système de pile à combustible comprenant:
un empilement de piles à combustible (12) formé en empilant une pluralité de piles à combustible (26), lesdites piles à combustible (26) comprenant chacune un ensemble d'électrodes à électrolyte (36) et un séparateur (38) empilés l'un sur l'autre, ledit ensemble d'électrodes à électrolyte (36) comprenant une anode (34), une cathode (32), et un électrolyte (30) interposé entre ladite anode (34) et ladite cathode (32);
un échangeur thermique (18) pour chauffer un gaz contenant de l'oxygène devant être fourni audit empilement de piles à combustible (12);
un évaporateur (20) pour évaporer de l'eau pour produire un combustible mixte d'un combustible brut contenant principalement un hydrocarbure et de la vapeur d'eau;
un reformeur (22) pour reformer le combustible mixte pour produire un gaz reformé;et
un boîtier (16) contenant au moins ledit empilement de piles à combustible (12), ledit échangeur thermique (18), ledit évaporateur (20), et ledit reformeur (22), dans lequel un canal de gaz d'échappement (76) en tant que passage d'un gaz échappement évacué dudit empilement de piles à combustible (12) après consommation dans la réaction de génération d'énergie est fourni dans ledit boîtier (16), et ledit canal de gaz d'échappement (76) comprend:
un premier canal (78) pour fournir le gaz d'échappement audit reformeur (22) en tant que source de chaleur pour reformer le gaz combustible mixte;
un deuxième canal (80) pour fournir le gaz d'échappement audit échangeur thermique (18) en tant que source de chaleur pour chauffer le gaz contenant de l'oxygène; et
un troisième canal (82) connecté au côté en aval du deuxième canal (80) pour fournir le gaz d'échappement audit évaporateur (20) en tant que source de chaleur pour évaporer de l'eau,
dans lequel ledit reformeur (22) comprend une entrée (102) et une sortie (122) et est agencé de sorte que le combustible mixte puisse s'écouler à travers ladite entrée (102) dans ledit reformeur (22), et le gaz reformé peut être fourni audit empilement de piles à combustible (12) à travers ladite sortie (122);
**caractérisé en ce que**, par comparaison avec ladite sortie (122), ladite entrée (102) est fournie plus proche d'une sortie de gaz d'échappement (83) dudit premier canal (78), et le premier canal (78) est ouvert vers le reformeur (22) à travers ladite sortie de gaz d'échappement (83);
et **en ce que** ledit premier canal (78) bifurque dudit deuxième canal (80).

2. Système de pile à combustible selon la revendication 1, dans lequel une unité fluide (14) comprenant au moins ledit échangeur thermique (18), ledit évaporateur (20) et ledit reformeur (22) est fournie sur un côté dudit empilement de piles à combustible (12), et
ladite unité fluide (14) est fournie symétriquement par rapport à l'axe central dudit empilement de piles à combustible (12).

3. Système de pile à combustible selon la revendication 1, dans lequel ledit reformeur (22) est fourni adjacent audit empilement de piles à combustible (12), et ledit évaporateur (20) est fourni adjacent audit reformeur (22) sur un côté à l'écart dudit empilement de piles à combustible (12), et
ledit échangeur thermique (18) est fourni à l'extérieur dudit reformeur (22).

4. Système de pile à combustible selon la revendication 1, dans lequel ledit évaporateur (152) est fourni à l'extérieur dudit reformeur (22), et ledit échangeur thermique (18) est fourni à l'extérieur dudit évaporateur (152).

5. Système de pile à combustible selon la revendication 1, dans lequel par comparaison avec ledit évaporateur (20), ledit reformeur (22) et ledit échangeur thermique (18) sont fournis plus près dudit empilement de piles à combustible (12).

6. Système de pile à combustible selon la revendication 1, dans lequel une couche d'isolation thermique (129a) est fournie autour dudit évaporateur (20) ; et
le gaz d'échappement est rempli dans ladite couche d'isolation thermique (129a).
